# EUROPÄISCHE PATENTSCHRIFT

(11) **EP 0 603 855 B1**
(45) Veröffentlichungstag und Bekanntmachung des Hinweises auf die Patenterteilung: **11.06.1997**
(21) Anmeldenummer: 93120688.2
(22) Anmeldetag: 22.12.1993
(51) Int. Cl.: F16B 7/04

(54) **Rohrclip zum lösbaren Verbinden zweier Rohre**
Pipe clip for detachably connecting two pipes
Clip pour connecter de façon détachable deux tuyaux

(30) Priorität: 24.12.1992 DE 4244207
(43) Veröffentlichungstag der Anmeldung: 29.06.1994
(73) Patentinhaber: Sacher, Dominic, D-82041 Oberhaching (DE)
(72) Erfinder: Sacher, Dominic, D-82041 Oberhaching (DE)
(74) Vertreter: Flosdorff, Jürgen, Dr.

(56) Entgegenhaltungen:
- DE-C- 866 274
- FR-A- 2 324 928
- GB-A- 1 032 307

## Beschreibung

Die Erfindung betrifft eine Einrichtung zum lösbaren Verbinden zweier Rohre, insbesondere eines Trägersystems im Laden- und Messebau, im Bürobereich oder auch im Wohnbereich. Solche Trägersysteme können beispielsweise als Beleuchtungsträger der Niedervolttechnik dienen, um ein typisches Anwendungsgebiet aus einer Fülle von Verwendungsmöglichkeiten zu nennen.

Die Rohre derartiger Trägersysteme können beispielsweise Aluminiumrohre oder pulverbeschichtete Stahlrohre sein. Da das Verbindungssystem so ausgestaltet sein soll, daß sich die Rohre leicht verbinden und wieder voneinander lösen lassen, ist es wünschenswert, daß die Rohre durch die Verbindungseinrichtung nicht verkratzt werden, da hierdurch ihr Erscheinungsbild erheblich beeinträchtigt würde.

Aus der DE-C-866 274 ist zum Verbinden zweier aneinander angrenzender Stangen oder Rohre eine längsgeschlitzte federnde Hülse bekannt, die im ungespannten Zustand eine geringere lichte Weite als die zu verbindenden Teile hat und eine so hohe Federspannung besitzt, daß sie durch ihre federnde Anpressung die Rohre oder Stangen in einen Festsitz nimmt. Diese Bauteile werden in die seitlichen Enden der Federhülse eingesteckt, wozu diese mit Aussenkungen bzw. nach innen gerichteten Abschrägungen versehen sein kann. Als zusätzliche Sicherung können Spannstifte durch miteinander fluchtende Bohrungen der Federhülse und der Rohre eingesetzt werden.

Der vorliegenden Erfindung liegt die Aufgabe zugrunde, eine Verbindungseinrichtung zum Verbinden zweier Rohre anzugeben, mit der die Rohre schnell und einfach, ohne Verwendung eines Werkzeugs verbunden werden können, und die außerdem wieder leicht lösbar ist, wenn das Trägersystem auseinander genommen werden soll. Die Verbindungseinrichtung soll zudem eine Rohrverbindung herstellen, die dem Trägersystem eine ausreichende Festigkeit verleiht und eine zuverlässige Verbindung schafft.

Diese Aufgabe wird erfindungsgemäß durch die im Kennzeichen des Anspruchs 1 angegebenen Merkmale gelöst. Vorteilhafte Weiterbildungen der Erfindung sind in den Unteransprüchen gekennzeichnet. Gemäß der vorliegenden Erfindung ist ein Rohrclip vorgesehen, der aus einem Basiselement und wenigstens zwei an dessen Innenwand angesetzten Stiften besteht. Der Rohrclip besteht aus einem elastischen Material, und das Basiselement hat im entspannten, d.h. nicht-eingebauten Zustand querschnittlich etwas kleinere Innenabmessungen als die Außenabmessungen der zu verbindenden Rohre, so daß das Basiselement, das die Form eines offenen Ringabschnitts hat, beim Aufstecken auf die Rohre aufgeweitet wird und unter Vorspannung an den Rohraußenwänden anliegt. Die vorzugsweise zwei Stifte des Basiselementes durchgreifen in der Einbaulage des Clips jeweils zwei miteinander fluchtende Durchgangsbohrungen des zugehörigen Rohres, wenn es sich hierbei um ein Hohlprofil handelt. Unter Umständen kann es auch hinreichend sein, wenn jeder Stift nur eine Bohrung des zugehörigen Rohres durchgreift (beispielsweise bei Rohren mit Vollquerschnitt), jedoch dürfte dies nicht der Normalfall sein.

Mit dem erfindungsgemäßen Rohrclip ist schnell und einfach eine Verbindung zwischen zwei Rohren herzustellen, indem diese - nachdem sie in ihren Endbereichen mit den in einem vorbestimmten Abstand zum Rohrende angeordneten Durchgangsbohrungen versehen sind, aneinandergelegt werden, so daß die Durchgangsbohrungen auf einer zur Längsachse der Rohre parallelen Linie liegen. Daraufhin werden die vorzugsweise kreiszylindrischen Stifte des Rohrclips in die Durchgangsbohrungen der Rohre eingeführt, bis die Randkanten des Basiselements in Kontakt mit den beiden Rohren geraten. Durch Aufbringen einer Druckkraft auf das Basiselement wird dieses unter zeitweiliger Aufweitung auf die Rohre aufgeclipst, wobei die beiden Stifte vorzugsweise aus den Durchgangsbohrungen der Rohre herausragen und vorzugsweise 1 bis 2 mm über der Umfangswand der Rohre vorstehen.

Da das Basiselement in einem vorzugsweise geringfügig aufgeweitetem Zustand auf den Rohren sitzt, wird dieses durch die Federkraft zuverlässig auf den Rohren gehalten, wozu auch der vorzugsweise formschlüssige Eingriff der Stifte in die Bohrungen der Rohre beiträgt.

Gemäß der Erfindung wird ferner vorgeschlagen, daß der Rohrclip an der Seite der verbundenen Rohre auf die Rohre aufgesetzt wird, an der die Zugkräfte auftreten. Im Normalfall eines beidseitig gestützten Trägers ist dies die Unterseite des Trägers bzw. der Rohre. Dies heißt, daß der erfindungsgemäße Rohrclip in der Einbaulage des Trägersystems von unten auf die Rohre aufgeclipst ist. Im oberen Druckbereich der Rohrverbindung liegen die beiden Rohre mit ihren Stirnflächen aneinander an, während im unteren Zugbereich die Zugkräfte von dem Basiselement aufgenommen und über die Stifte in die Rohre eingeleitet werden. Auf diese Weise ist eine sehr stabile Verbindung geschaffen, die dem Trägersystem die für die Praxis erforderliche Festigkeit, insbesondere Zug- und Biegefestigkeit, aber auch Torsionsfestigkeit verleiht.

Mit Vorteil ist vorgesehen, daß die Innenwand des Basiselements eine solche Kontur hat, daß sie an den zugeordneten Rohraußenwandflächen anliegt. Bei ganzflächiger Anlage trägt dies zu einem sicheren Halt des Rohrclips an den beiden zu verbindenden Rohren bei.

In einer bevorzugten Ausführungsform der Erfindung hat das Basiselement in dem senkrecht zur Rohrlängsachse liegenden Querschnitt die Form eines Kreisringsabschnitts; wobei sich die Kreisringform auf die Innenwandkontur bezieht, jedoch zweckmäßigerweise auch für die Außenwandkontur vorgesehen ist. Die letztere könnte jedoch beispielsweise auch rechteckig gestaltet sein. Das Basiselement in Form eines offenen Kreisrings ist zur Verbindung von querschnittlich kreisförmigen Rohre vorgesehen.

Der Kreisringabschnitt erstreckt sich über einen Umfangsbereich, der 180° übersteigt, vorzugsweise über einen Umfangsbereich von ca. 240°. Hiermit ist sowohl ein leichtes Aufclipsen des Verbindungselementes auf die Rohre, ein sicherer Halt in der Einbaulage, bei dem eine unbeabsichtigte Trennung von den Rohren ausgeschlosen ist, und ein verhältnismäßig leicht zu bewerkstelligendes Abnehmen des Rohrclips zum Auseinandernehmen des Trägersystems gewährleistet.

Es liegt allerdings auch im Rahmen der Erfindung, daß das Basiselement querschnittlich die Form eines offenen mehreckigen Ringabschnitts, beispielsweise eine Sechseckform oder Achteckform haben kann, um Rohre mit entsprechendem Querschnitt miteinander zu verbinden. Das Basiselement kann auch aus einer ebenen Grundplatte mit an den seitlichen Enden angesetzten ebenen Stegen bestehen, die einen Winkel <90° mit der Grundplatte einschließen können und in der Einbaulage zu einem 90° Winkel nach außen gedrückt werden. Ein derartiger Rohrclip ist zum Verbinden von Rohren bzw. Tragelementen mit rechtwinkligem Querschnitt vorgesehen.

Die Stifte, die zweckmäßigerweise die Form eines Kreiszylinders haben, sollten eine solche Länge besitzen, daß sie über die abgewandte Außenwandfläche der Rohre überstehen. Dieser Überstand kann etwa 1 mm betragen.

Es liegt im Rahmen der Erfindung, daß die Stifte zum Lösen des Rohrclips von den Rohren herangezogen werden können, indem die überstehenden Stiftenden in zur Montagerichtung umgekehrter Richtung in die Durchgangsbohrungen hineingedrückt werden. Dabei sollten die Stifte eine solche Länge haben, daß in dem zurückgedrückten Zustand der Stifte das Basiselement sich entweder selbsttätig von den Rohren löst oder leicht zur Entnahme von den Fingern einer Arbeitsperson untergriffen und abgenommen werden können.

Die Stifte sollten im wesentlichen formschlüssig in den Durchgangsbohrungen sitzen, um eine stabile, wackelfreie Verbindung zu schaffen.

Zweckmäßigerweise wird der erfindungsgemäße Rohrclip einstückig im Spritzgußverfahren hergestellt, wobei er aus einem elastischen Kunststoff wie Makrolon bestehen sollte.

Die erfindungsgemäße Rohrverbindung hat zusätzlich zu den oben aufgeführten Eigenschaften den Vorteil, daß die Ausbildung der Durchgangsbohrungen in den Endabschnitten der Rohre mit normalen Toleranzen erfolgen kann, da es nicht unbedingt erforderlich ist, daß die Rohrenden im Verbindungszustand aneinander anliegen. Allerdings muß darauf geachtet werden, daß der minimale axiale Abstand der Durchgangsbohrungen der beiden Rohre den Abstand zwischen den beiden Stiften des Rohrclips nicht übersteigt.

Nachfolgend werden einige bevorzugte Ausführungsformen der Erfindung in näheren Einzelheiten mit Bezug auf die Zeichnung erläutert. Dabei zeigen:
- Fig. 1: eine Aufsicht auf die Innenseite einer ersten Ausführungsform des erfindungsgmäßen Rohrclips;
- Fig. 2: einen Querschnitt durch den Rohrclip gemäß Fig. 1;
- Fig. 3: einen Längsschnitt durch den Rohrclip gemäß Fig. 1;
- Fig. 4: eind schematische Querschnittsdarstellung einer zweiten Ausführungsform des erfindungsgemäßen Rohrclips und
- Fig. 5: einen schematischen Querschnitt durch eine dritte Ausführungsform der Erfindung.

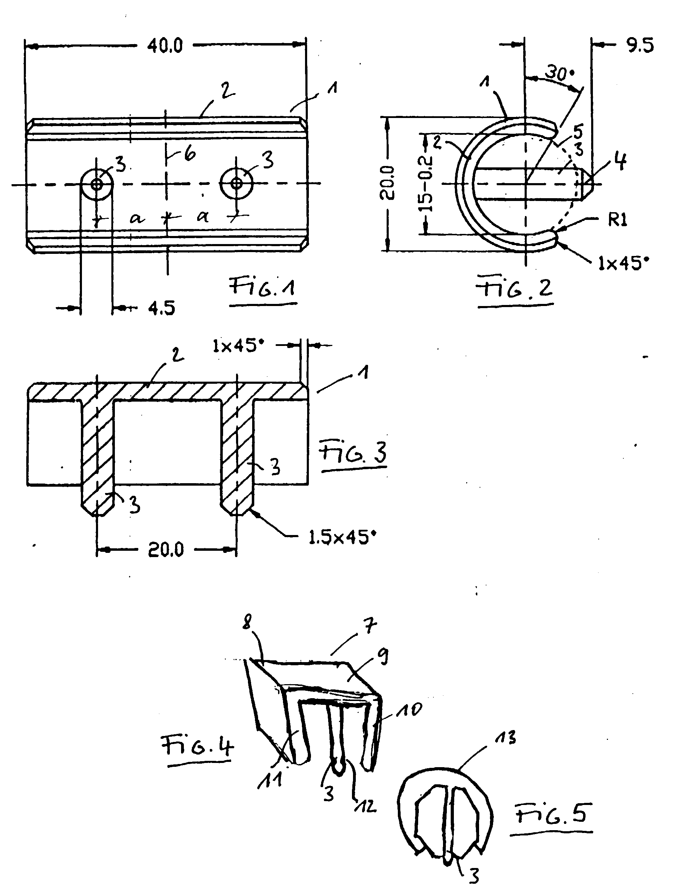

Der in den Figuren 1 bis 3 abgebildete Rohrclip 1 besteht aus einem Basiselement 2, das insgesamt die Form eines offenen Kreiszylinderabschnitts und in dem in Figur 2 abgebildeten Querschnitt die Form eines Kreisringabschnitts hat, der sich über einen Umfang von 240° erstreckt. An der Innenwand des Basiselementes 2 sind zwei in axialer Richtung voneinander beabstandete, kreiszylindrische Stifte 3 angesetzt, deren Längsachsen auf der Symmetrieebene 4 des Rohrclips liegen und sich mittig durch die verbliebene Öffnung des Basiselementes 2 erstrecken. Die an ihren Enden konisch oder gewölbt sich verjüngenden Stifte 3 erstrecken sich über eine -gedachte- Kreislinie hinaus fort, die die Innenwandkontur des Basiselementes 2 schließt. Dieser gedachte Kreis ist in Figur 2 mit dem Bezugszeichen 5 angedeutet.

Die beiden Stifte 3 sind im gleichen Abstand a von der Mittelquerachse 6 des Rohrclips angeformt. Die beiden zu verbindenden Rohre (nicht dargestellt) enthalten jeweils zwei miteinander fluchtende Durchgangsbohrungen durch die Rohrwandung in einem Abstand vom Rohrende, der ebenfalls gleich a oder aber geringfügig kleiner ist. Diese Durchgangsbohrungen haben einen Innendurchmesser, der dem Außendurchmesser der Stifte 3 entspricht oder geringfügig größer als dieser ist.

Zum Verbinden der beiden Rohre werden die Stifte 3 in die Durchgangsbohrungen der beiden Rohre eingeführt, und das Basiselement wird so fest gegen die beiden Rohre gedrückt, daß es zunächst aufgeweitet wird und dann auf die beiden Rohre "aufschnappt". In der Befestigungslage treten die beiden Stifte 3 mit ihren Endabschnitten aus den Rohren aus, und das Basiselement sitzt so fest auf den beiden Rohren, daß eine durch Formgebung und Material vorbestimmte Zugkraft erforderlich ist, um die Verbindung zu lösen. Aus Sicherheitsgründen kann die zum Lösen erforderliche Zugkraft so eingestellt sein, daß sie 10 kg beträgt, um den Rohrclip abzunehmen.

Die beiden Randkanten des Basiselements 2 sind -wie Figur 2 zeigt- gerundet, weshalb auch pulverbeschichtete Rohre bei einem "Aufclipsen" und beim Abnehmen des Rohrclips nicht verkratzt werden.

Es liegt im Rahmen der Erfindung, an den beiden Randkanten des Basiselementes 2 nach außen abgewinkelte Flanschabschnitte anzuformen, die das Abnehmen des Rohrclips weiter erleichtern.

In Figur 4 ist ein anderer erfindungsgemäßer Rohrclip 7 abgebildet, dessen Basiselement 8 aus einer ebenen Grundplatte 9 und zwei seitlichen Stegen 10, 11 besteht, die im entspannten Zustand des Rohrclips geringfügig nach innen geneigt sind. Beim Aufsetzen des Rohrclips 7 auf zwei zu verbindende rechtwinklige Rohre werden die seitlichen Stege 10, 11 nach außen gedrückt, so daß sie in der Einbaulage mit Vorspannung an der Rohrwandung anliegen und daran gehalten sind. Zur zusätzlichen Sicherung dieser Verbindung können die Stifte 3 an ihrem Endbereich mit Ringnuten 12 versehen sein, in die die zugehörige Rohrwandung einrastet. Dies kann auch bei den anderen Rohrclips als zusätzliche Sicherungsmaßnahme vorgesehen sein.

Der in Figur 5 abgebildete Rohrclip ist zum Verbinden achteckiger Rohre vorgesehen und hat eine entsprechende offene Innenkontur. Die Außenkontur kann entsprechend eckig oder aber auch kreisrund ausgebildet sein.

Bei einem als Beleuchtungsträger geeigneten Trägersystem hat ein für die Praxis bestens geeigneter Rohrclip eine axiale Länge von 40 mm, wobei die beiden Stifte 20 mm voneinander beabstandet sind. Diese Rohrclips werden in der Zugzone des Trägers befestigt, d.h. bei einem normalen, beidseitig gestützten Träger an dessen Unterseite.

## Patentansprüche

1. Kombination aus zwei im wesentlichen aneinander angrenzenden Rohren und einem Rohrclip zum lösbaren Verbinden der Rohre, mit einem Basiselement (2, 8), das unter elastischer Aufweitung einen Umfangsabschnitt der Endbereiche der beiden Rohre umgreift,
**dadurch gekennzeichne**t,
daß das Basiselement (2) querschnittlich die Form eines solchen offenen Ringabschnitts aufweist, daß der Rohrclip unter vorübergehender Aufweitung seitlich auf die Rohre aufsteckbar ist, daß wenigstens zwei an der Innenwand des Basiselementes angesetzte Stifte (3) dabei jeweils zwei miteinander fluchtende Bohrungen durch die Wand des zugehörigen Rohres durchgreifen.

2. Kombination nach Anspruch 1,
dadurch gekennzeichnet, daß das Basiselement (2) querschnittlich die Form eines Kreisringabschnitts aufweist, wobei sich der Kreisringabschnitt (2) über einen Umfangsbereich >180°, vorzugsweise ca. 240° erstreckt.

3. Kombination nach Anspruch 1,
dadurch gekennzeichnet, daß das Basiselement querschnittlich die Form eines offenen mehreckigen Ringabschnitts hat.

4. Kombination nach Anspruch 1,
dadurch gekennzeichnet, daß das Basiselement (8) eine ebene Grundplatte (9) und an deren seitlichen Enden zwei ebene Stege (10, 11) aufweist, die einen Winkel <90° mit der Grundplatte (9) einschließen.

5. Kombination nach einem der Ansprüche 1 bis 4,
dadurch gekennzeichnet, daß die Stifte (3) eine solche Länge haben, daß sie über die Außenwandfläche der Rohre überstehen.

6. Kombination nach einem der Ansprüche 1 bis 5,
dadurch gekennzeichnet, daß die Stifte (3) im wesentlichen formschlüssig in den Durchgangsbohrungen sitzen.

7. Kombination nach einem der Ansprüche 1 bis 6,
dadurch gekennzeichnet, daß der Rohrclip (1, 7, 13) einstückig im Spritzgußverfahren hergestellt ist.

8. Kombination nach einem der Ansprüche 1 bis 7,
dadurch gekennzeichnet, daß der Rohrclip aus einem elastischen Kunststoff besteht.

9. Kombination nach einem der Ansprüche 1 bis 8,
dadurch gekennzeichnet, daß der Rohrclip (1, 7, 13) an der Seite der verbundenen Rohre, an der Zugkräfte auftreten, auf die Rohre aufgeclipst ist.

## Claims

1. Combination of two essentially adjoining tubes and a tube clip for connecting the tubes in a releasable manner, with a base element (2, 8) which embraces a circumferential segment of the end regions of the two tubes while widening elastically,
characterised in that in cross-section the base element (2) has the shape of an open ring segment such that the tube clip can be slipped onto the tubes at the side while widening temporarily, and that in the process at least two pins (3) fastened to the inner wall of the base element pass through two aligned holes through the wall of the associated tube.

2. Combination according to claim 1,
characterised in that in cross-section the base element (2) has the shape of a circular ring segment, the circular ring segment (2) extending over a circumferential region of >180°, preferably approximately 240°.

3. Combination according to claim 1,
characterised in that in cross-section the base element has the shape of an open polygonal ring segment.

4. Combination according to claim 1,
characterised in that the base element (8) has a plane base plate (9) and comprises at the lateral ends thereof two plane webs (10, 11) which form an angle of <90° with the base plate (9).

5. Combination according to one of claims 1 to 4,
characterised in that the pins (3) are of a length which is such that they project beyond the outer wall surface of the tubes.

6. Combination according to one of claims 1 to 5,
characterised in that the pins (3) are essentially seated positively in the through-holes.

7. Combination according to one of claims 1 to 6,
characterised in that the tube clip (1, 7, 13) is produced in one piece in an injection moulding process.

8. Combination according to one of claims 1 to 7,
characterised in that the tube clip consists of an elastic plastics material.

9. Combination according to one of claims 1 to 8,
characterised in that the tube clip (1, 7, 13) is clipped onto the tubes on the side of the connected tubes at which tensile forces occur.

## Revendications

1. Combinaison de deux tuyaux sensiblement bout-à-bout et d'un clip pour la connexion amovible des tuyaux comprenant un élément de base (2, 8) qui entoure une section périphérique des zones d'extrémités des deux tuyaux en s'élargissant élastiquement,
caractérisée en ce que
l'élément de base (2) présente une section transversale en forme de section annulaire ouverte, en ce que le clip peut être emboîté latéralement sur les tuyaux en s'élargissant provisoirement, en ce qu'au moins deux chevilles (3), placées sur la paroi interne de l'élément de base, traversent la paroi du tuyau respectif par deux perçages alignés.

2. Combinaison selon la revendication 1,
caractérisée en ce que l'élément de base (2) présente une section transversale en forme de segment d'anneau de cercle, le segment d'anneau de cercle (2) s'étendant de préférence sur une zone périphérique > 180°, de préférence sur 250°.

3. Combinaison selon la revendication 1,
caractérisée en ce que l'élément de base présente une section transversale en forme de segment annulaire ouvert polygonal.

4. Combinaison selon la revendication 1,
caractérisée en ce que l'élément de base (8) présente une plaque de fond plane (9) et deux traverses planes (10, 11) ménagées sur les extrémités latérales de cette dernière, et formant un angle < 90° avec la plaque de fond (9).

5. Combinaison selon l'une des revendications 1 à 4,
caractérisée en ce que les chevilles (3) ont une longueur suffisante pour faire saillie au-delà de la surface de paroi externe des tuyaux.

6. Combinaison selon l'une des revendications 1 à 5,
caractérisée en ce que les chevilles (3) reposent sensiblement par adhérence de forme dans les perçages de passage.

7. Combinaison selon l'une des revendications 1 à 6,
caractérisée en ce que le clip (1, 7, 13) est fabriqué d'une seule pièce dans le procédé de moulage par injection.

8. Combinaison selon l'une des revendications 1 à 7,
caractérisée en ce que le clip se compose d'une matière plastique élastique.

9. Combinaison selon l'une des revendications 1 à 8,
caractérisée en ce que le clip (1, 7, 13) est clipsé sur la face des tuyaux reliés subissant les forces de traction.
